# EUROPÄISCHE PATENTSCHRIFT

(11) **EP 2 438 407 B1**
(45) Veröffentlichungstag und Bekanntmachung des Hinweises auf die Patenterteilung: **24.01.2018**
(21) Anmeldenummer: 10720005.7
(22) Anmeldetag: 23.04.2010
(51) Int. Cl.: G01F 23/296, G01N 9/00

(54) **VERFAHREN ZUR BESTIMMUNG ODER ÜBERWACHUNG EINES VORBESTIMMTEN FÜLLSTANDS, EINER PHASENGRENZE ODER DER DICHTE EINES MEDIUMS**
METHOD FOR DETERMINING OR MONITORING OF A PREDETERMINED LEVEL, PHASE BOUNDARY OR DENSITY OF A MEDIUM
PROCÉDÉ POUR DÉTERMINER OU SURVEILLER UN NIVEAU PRÉDÉTERMINÉ, UNE LIMITE DE PHASE OU LA DENSITÉ D'UN MÉDIUM

(30) Priorität: 03.06.2009 DE 102009026685
(43) Veröffentlichungstag der Anmeldung: 11.04.2012
(73) Patentinhaber: Endress+Hauser GmbH+Co. KG, 79689 Maulburg (DE)
(72) Erfinder: FRÜHAUF, Dietmar, 79539 Lörrach (DE); URBAN, Martin, 79541 Lörrach (DE); HORTENBACH, Martin, 76351 Linkenheim-Hochstetten (DE); RUHNAU, Frank, 75334 Straubenhardt (DE); SIEGEL, Michael, 76185 Karlsruhe (DE); BRENGARTNER Tobias, 79111 Freiburg (DE)
(74) Vertreter: Andres, Angelika Maria
(86) Internationale Anmeldenummer: PCT/EP2010/055445
(87) Internationale Veröffentlichungsnummer: WO 2010/139508

(56) Entgegenhaltungen:
- EP-A1- 0 123 189
- EP-A2- 0 296 583
- EP-A2- 1 333 256

## Beschreibung

Die Erfindung betrifft ein Verfahren und eine Vorrichtung zur Bestimmung oder Überwachung eines vorbestimmten Füllstandes, einer Phasengrenze oder der Dichte eines Mediums einem Behälter mit einer schwingfähigen Einheit, wobei die schwingfähige Einheit auf der Höhe des vorbestimmten Füllstandes oder der Phasengrenze angebracht wird. Ist sichergestellt, dass die schwingfähige Einheit in das Medium eintaucht, können das erfindungsgemäße Verfahren und die erfindungsgemäße Vorrichtung auch zur Dichtemessung des Mediums herangezogen werden.

Vibrationsdetektoren bzw. Grenzstandschalter zur Detektion bzw. zur Überwachung des Füllstandes, der Phasengrenze oder der Dichte eines Mediums in einem Behälter sind bereits bekannt geworden. Sie werden von der Anmelderin in einer Vielzahl von Ausgestaltungen unter den Bezeichnungen LIQUIPHANT und SOLIPHANT angeboten und vertrieben.

Vibrationsdetektoren weisen üblicherweise ein Schwingstab oder eine Schwinggabel als Schwingelement auf; das Schwingelement ist an einer Membran befestigt. Darüber hinaus sind auch so genannte Membranschwinger bekannt geworden, bei denen auf das zusätzliche Schwingelement verzichtet wird. Die Membran selbst ist in ein Sensorgehäuse eingespannt und wird über einen elektromechanischen oder einen piezoelektrischen Antrieb zu Schwingungen angeregt. Als Sende-/ Empfangseinheit wird üblicherweise ein Stapel- oder ein Bimorphantrieb verwendet. Die Anregung der schwingfähigen Einheit erfolgt mit der Resonanzfrequenz - es erfolgt hier also eine sog. Grundwellenanregung -, wobei die Phasenverschiebung zwischen dem Sende- und Empfangssignals üblicherweise in einem definierten Bereich liegt. Üblicherweise erstreckt sich dieser Bereich zwischen 46° und 140° liegt.

Als Füllstandsmessgeräte ausgebildete Vibrationsdetektoren nutzen den Effekt aus, dass die Schwingungsfrequenz und die Schwingungsamplitude abhängig sind von dem jeweiligen Bedeckungsgrad des Schwingelements: Während das Schwingelement in Luft frei und ungedämpft seine Schwingungen ausführen kann, erfährt es eine Frequenz- und Amplituden-änderung, sobald es teilweise oder vollständig in das Medium eintaucht. Anhand einer vorbestimmten Frequenzänderung lässt sich folglich eindeutig auf das Erreichen des vorbestimmten Füllstandes oder einer vorbestimmten Phasengrenze des Mediums in dem Behälter rückschließen. Füllstandsmess-geräte werden übrigens vornehmlich als Überfüllsicherungen oder zum Zwecke des Pumpenleerlaufschutzes verwendet.

Darüber hinaus wird die Schwingung des Schwingelements auch von der jeweiligen Dichte des Mediums beeinflusst, da sich die mitbewegte Masse mit der Dichte ändert. Daher besteht bei konstantem Bedeckungsgrad eine funktionale Beziehung zur Dichte des Mediums, so dass Vibrationsdetektoren sowohl für die Füllstands- als auch für die Dichtebestimmung bestens geeignet sind.

In der Praxis werden zwecks Überwachung und Erkennung des Füllstandes bzw. der Dichte des Mediums in dem Behälter die Schwingungen der Membran aufgenommen und mittels zumindest eines piezoelektrischen Elements in elektrische Empfangssignale umgewandelt. Die elektrischen Empfangssignale werden anschließend von einer Auswerte-Elektronik ausgewertet. Im Falle der Füllstandsbestimmung überwacht die Auswerte-Elektronik die Schwingungsfrequenz und/oder die Schwingungsamplitude des Schwingelements und signalisiert den Zustand 'Sensor bedeckt' bzw. 'Sensor unbedeckt', sobald die Messwerte einen vorgegebenen Referenzwert unter- oder überschreiten. Eine entsprechende Meldung an das Bedienpersonal kann auf optischem und/oder auf akustischem Weg erfolgen. Alternativ oder zusätzlich wird ein Schaltvorgang ausgelöst; so wird etwa ein Zu- oder Ablaufventil an dem Behälter geöffnet oder geschlossen.

Die zuvor genannten Geräte zum Messen des Füllstandes/der Phasengrenze oder der Dichte werden in einer Vielzahl von Industriezweigen eingesetzt, beispielsweise in der Chemie, in der Lebensmittelindustrie oder bei der Wasseraufbereitung. Die Bandbreite der überwachten Füllgüter reicht von Wasser über Yoghurt, Farben und Lacke bis hin zu hochviskosen Medien, wie Honig, oder bis hin zu stark schäumenden Medien, wie Bier.

Bekannte Vibrationsdetektoren zeichnen sich durch einen geschlossenen Schwingkreis aus, der aus analogen Komponenten aufgebaut ist. Um die unterschiedlichen Typen von Vibrationsdetektoren betreiben zu können, müssen die analogen Komponenten möglichst optimal auf die jeweiligen Ausgestaltungen der Vibrationsdetektoren abgestimmt werden. Eine große Rolle spielt hier u.a. die jeweilige Geometrie der schwingfähigen Einheit. Weiterhin ist ein Mikrocontroller vorgesehen, der die Auswertung der ermittelten Frequenz vornimmt und die Kommunikation mit einem zentralen Rechner steuert.

Neben dem hohen Entwicklungs-, Zeit- und Kostenaufwand fehlen den bisherigen Einzellösungen die gewünschte hohe Flexibilität und die kompakte Bauform. So erlauben bekannt Vibrationssensoren oftmals nur eine Aussage darüber, ob das schwingfähige Element bedeckt ist oder nicht. Auch kommen für die Regel-/Auswerteeinheit oftmals elektronische Spezialbauteile zur Verwendung, was nachteilig ist, da diese Bauteile relativ hohe Bauteiltoleranzen aufweisen. Nachteilig scheint auch, dass für die bekannten aus Elektronikbauteilen bestehenden Detektoren keinerlei Kopierschutz besteht: Ein Nachahmer kann einen Vibrationsdetektor in Kenntnis der Bauteile nachbauen, ohne vom Funktionsprinzip des Detektors nähere Kenntnis zu besitzen.

Der Erfindung liegt die Aufgabe zugrunde, ein Verfahren und eine Vorrichtung vorzuschlagen, das bzw. die es erlaubt, unterschiedliche Typen von Vibratonsdetektoren mit einer weitgehend identischen Regel-/Auswerteeinheit auszustatten.

Die Aufgabe wird bezüglich des Verfahrens dadurch gelöst, dass die schwingfähige Einheit mittels eines Frequenzsuchlaufs innerhalb eines vorbestimmbaren Frequenzbandes im Arbeitsbereich der schwingfähigen Einheit sukzessive mit zeitlich aufeinander folgenden, diskreten Erregerfrequenzen zu Schwingungen angeregt wird, dass die entsprechenden Schwingungen der schwingfähigen Einheit in Form von Empfangssignalen empfangen werden, dass über den Frequenzsuchlauf die Erregerfrequenz ermittelt wird, bei der die schwingfähige Einheit mit einer Schwingfrequenz schwingt, die eine vorgegebene Phasenverschiebung zwischen dem Sendesignal und dem Empfangssignal aufweist. Entweder regt die Sende-/Empfangseinheit die schwingfähige Einheit mit der ermittelten Schwingfrequenz zu Schwingungen an (bei der Füllstandsmessung oder bei der Überwachung der Phasengrenze), oder es wird der nachfolgende Frequenzsuchlauf gestartet, so dass permanent Frequenzsuchläufe stattfinden (bei der Dichtemessung).

Insbesondere handelt es sich bei der Schwingfrequenz der schwingfähigen Einheit mit vorgegebener Phasenverschiebung um die Schwingfrequenz des Grundmodes - Grundwellenanregung - bei der vorgegebenen Phasenverschiebung oder um die Schwingfrequenz eines höheren Modes - Oberwellenanregung - bei der vorgegebenen Phasenverschiebung.

Eine vorteilhafte Ausgestaltung des erfindungsgemäßen Verfahrens sieht für den Fall, dass die schwingfähige Einheit außerhalb der Schwingfrequenz bei der vorgegebenen Phasenverschiebung zwischen Sendesignal und Empfangssignal schwingt, vor, dass ein erneuter Frequenzsuchlauf gestartet wird, bis die entsprechende Schwingfrequenz gefunden ist.

Im Gegensatz zu den bekannten analogen Vibrationsdetektoren ist die erfindungsgemäße Lösung weitgehend digital realisiert. Die schwingfähige Einheit wird unabhängig von der aktuellen Dämpfung mit ihrer Schwingfrequenz bei der vorgegebenen Phasenverschiebung zwischen Sende- und Empfangssignal betrieben. Die jeweils aktuelle Schwingfrequenz der schwingfähigen Einheit, sprich die aktuelle Resonanzfrequenz, wird ermittelt. Hierzu wird der Frequenz-Arbeitsbereich der schwingfähigen Einheit komplett abgescannt. Um die aktuelle Resonanzfrequenz der schwingfähigen Einheit zu bestimmen, ist es darüber hinaus notwendig, die Schwingungen der schwingfähigen Einheit von Rauschen und Störsignalen zu befreien.

Bekannte Vibrationsdetektoren weisen - wie bereits erwähnt - einen geschlossenen Schwingkreis aus schwingfähiger Einheit und Regel-/Auswerteeinheit auf. Hier stellt sich die Resonanzfrequenz im Arbeitsbereich der schwingfähigen Einheit bei fester Phasenverschiebung zwischen Sende- und Empfangssignal automatisch ein. Hingegen wird bei der erfindungs-gemäßen digitalen Vorrichtung eine Schwingung bestimmter Frequenz und damit gekoppelt auch einer bestimmten Phasenlage vorgegeben. Es erfolgt eine Zwangsanregung der schwingfähigen Einheit. Anschließend wird der gesamte Frequenz-Arbeitsbereich der schwingfähigen Einheit überstrichen, d.h. durch zeitlich sukzessive Anregung dicht beieinander liegender, diskreter Frequenzen wird die aktuelle Resonanzfrequenz der schwingfähigen Einheit ermittelt. Dieses Verfahren wird auch als Frequenz-Sweep bezeichnet.

Bevorzugt wird die Schwingfrequenz der schwingfähigen Einheit bei der vorgegebenen Phasenverschiebung zwischen Sendesignal und Empfangssignal über die Auswertung der Amplituden der an der Sende-/Empfangseinheit empfangenen Empfangssignale ermittelt. Alternativ ist vorgesehen, dass die Schwingfrequenz der schwingfähigen Einheit bei der vorgegebenen Phasenverschiebung zwischen Sendesignal und Empfangssignal über die Auswertung der Phasenverschiebung zwischen dem Sendesignal und dem Empfangssignal ermittelt wird. So tritt im Empfängersignal sowohl im Resonanzfall als auch im Anti-Resonanzfall ein Phasensprung von 180° auf.

Eine Ausgestaltung des erfindungsgemäßen Verfahrens sieht vor, dass die Lösung komplett auf digitalisierter Basis realisiert ist. In diesem Fall wird das Empfangssignal mittels eines Analog-/Digital-Wandlers digitalisiert und rein digital weiterverarbeitet. Alternativ besteht die Möglichkeit, die erfindungs-gemäße Lösung mittels schaltbarer Bestückungsvarianten zu realisieren. Hierzu kann die analoge Schaltungstechnik weitgehend beibehalten werden; die jeweils benötigten Signalwege werden, durch einen Mikrocontroller gesteuert und mittels Analogschaltern so gelegt, dass die jeweils benötigten Schaltungsteile im Signalpfad liegen.

Bevorzugt ist die Regel-/Auswerteeinheit bei der erfindungsgemäßen Lösung jedoch als digitale Schaltung, insbesondere als digitaler Signalprozessor DSP, als FPGA, FPAA oder als PSoC - Programmable System on Chip - ausgestaltet. Auf einem PSoC sind konfigurierbare analoge und digitale Resourcen zusammen mit einem Mikrocontroller in einem integrierten Schaltkreis angeordnet. Da nur wenige externe Bauteile notwendig sind, sind die PSoC sehr Platz sparend und darüber hinaus kostengünstig.

Gemäß einer vorteilhaften Ausgestaltung des erfindungsgemäßen Verfahrens ist vorgesehen, dass die Auswertung der Phasenverschiebung zwischen dem Sendesignal und dem Empfangssignal über eine phasenselektive Gleichrichtung erfolgt, welche eine phasen- und amplitudenproportionale Gleichspannung erzeugt. Hierbei werden die Empfangssignale des phasenselektiven Gleichrichters durch das Empfangssignal der Sende-/Empfangseinheit und einem aus der Sendeeinheit abgeleiteten Signal gebildet. Das abgeleitet Signal ist bevorzugt ein periodisches Rechteck- oder Sinussignal.

Darüber hinaus wird vorgeschlagen, dass während eines Frequenzsuchlaufs der Frequenzbereich im Arbeitsbereich der schwingfähigen Einheit überfahren wird.

Gemäß einer ersten Ausführungsform des erfindungsgemäßen Verfahrens ist vorgesehen, dass anhand von zwei im wesentlichen symmetrisch zur Schwingfrequenz der schwingfähigen Einheit bei der vorgegebenen Phasenverschiebung zwischen Sendesignal und Empfangssignal liegenden Frequenzen, bei denen vorgegebene Schwellwerte der Amplitude der Empfangssignale oder der phasenproportionalen Gleichspannung erreicht bzw. überschritten werden, die Schwingfrequenz der schwingfähigen Einheit bei der vorgegebenen Phasenverschiebung zwischen Sendesignal und Empfangssignal ermittelt wird.

Eine alternative Ausgestaltung des erfindungsgemäßen Verfahrens schlägt vor, dass das von einem phasenselektiven Gleichrichter erzeugte phasenselektive Signal in einen positiven Signalanteil und in einen negativen Signalanteil zerlegt wird, dass die Hüllkurve des positiven Signalanteils und die Hüllkurve des negativen Signalanteils gebildet werden, dass die beiden Hüllkurven addiert werden und dass anhand des Additionssignals die aktuelle Resonanzfrequenz der schwingfähigen Einheit bei der vorgegebenen Phasenverschiebung zwischen Sendesignal und Empfangssignal ermittelt wird. Das Verfahren wird hier mit einem Hüllkurvendetektor durchgeführt. Das Additionssignal hat die maximale Amplitude stets bei einer Frequenz, bei der die Phasenverschiebung zwischen Sende- und Empfangssignal der vorgegebenen, gewünschten Phasenverschiebung entspricht.

Die Realisierung des Hüllkurvendetektors kann über eine Diode und ein nach geschaltetes RC-Glied erfolgen. Je nachdem, in welcher Richtung die Diode betrieben wird, lässt diese entweder ausschließlich den positiven oder den negativen Anteil des anliegenden Signals durch. Das nachgeschaltete RC-Glied ermittelt aus dem resultierenden Ausgangssignal die Hüllkurve.

Um den negativen und den positiven Anteil des phasenselektiven Signals zu ermitteln sind folglich zwei Hüllkurvendetektoren erforderlich. Um zu verhindern, dass die Dioden einen Teil des phasenselektiven Signals abschneiden, wird zu dem phasenselektiven Signal ggf. eine Gleichspannung addiert.

Die Aufgabe wird bezüglich der Vorrichtung dadurch gelöst, dass eine Sende-/Empfangseinheit vorgesehen ist, die die schwingfähige Einheit mittels eines Frequenzsuchlaufs innerhalb eines vorbestimmbaren Frequenzbandes im Arbeitsbereich der schwingfähigen Einheit sukzessive mit aufeinander folgenden diskreten Erregerfrequenzen zu Schwingungen anregt und die die entsprechenden Schwingungen der schwingfähigen Einheit empfängt, dass eine Regel-/Auswerteeinheit vorgesehen ist, die die Erregerfrequenz ermittelt, bei der die schwingfähige Einheit bei einer Schwingfrequenz mit einer vorgegebenen Phasenverschiebung zwischen Sendesignal und Empfangssignal schwingt und dass die Sende-/Empfangseinheit die schwingfähige Einheit mit der ermittelten Schwingfrequenz bei der vorgegebenen Phasenverschiebung zwischen Sendesignal und Empfangssignal zu Schwingungen anregt.

Weiterhin ist die Regel-/Auswerteeinheit so ausgestaltet, dass sie während des Frequenzsuchlaufs die Schwingfrequenz der schwingfähigen Einheit bei der vorgegebenen Phasenverschiebung zwischen Sendesignal und Empfangssignal über die Auswertung der Phase zwischen dem Sendesignal und dem Empfangssignal oder der Amplitude des Empfangssignals ermittelt.

Die Vorteile der erfindungsgemäßen Lösung sind zusammengefasst die folgenden:
- Für alle Ausgestaltungen der schwingfähigen Einheiten und für alle Einsatzgebiete der Vibrationsdetektoren weist die Regel-/Auswerteeinheit identische Bauteile auf. Die erfindungsgemäße Lösung ist somit plattformfähig.
- Durch die Digitalisierung der Regel-/Auswerteeinheit wird eine hohe Flexibilität hinsichtlich der Funktionalität des Vibrationsdetektors erreicht; es liegt eine freie Skalierbarkeit vor, die Phasenverschiebung kann frei gewählt werden, und es ist eine digitale Schnittstelle vorhanden.
- Kopierschutz ist gegeben, da die Regel-/Auswerteeinheit nur mit erheblichem Aufwand nachgebaut werden kann.
- Die Kompaktheit der Regel-/Auswerteeinheit, die im Regelfall auf einer Leiterplatte angeordnet ist, ist gegeben.
- Es kann auf teuere Spezialbauteile mit relativ hohen Bauteile-Toleranzen verzichtet werden.

Gemäß einer vorteilhaften Ausgestaltung der erfindungsgemäßen Vorrichtung ist eine Regel-/Auswerteeinheit mit einem phasenselektiver Gleichrichter vorgesehen, wobei der Gleichrichter eine phasenselektive Gleichspannung erzeugt. Dem phasenselektiven Gleichrichter sind ein Tiefpassfilter und ein Komparator nachgeschaltet. Weiterhin ist ein Mikrocontroller vorgesehen, der anhand von zwei symmetrisch zur Resonanzfrequenz liegenden Frequenzen, bei denen vorgegebene Schwellwerte der Amplitude der Empfangssignale oder der phasenproportionalen Gleichspannung des Gleichrichters erreicht bzw. überschritten werden, die Schwingfrequenz der schwingfähigen Einheit bei der vorgegebenen Phasenverschiebung zwischen Sendesignal und Empfangssignal ermittelt.

Darüber hinaus ist vorgesehen, dass der phasenselektive Detektor aus einem Multiplizierer, einer Erzeugereinheit für ein Referenzsignal, dessen Taktfrequenz über den Mikrocontroller einstellbar ist, einem über den Mikrocontroller steuerbaren Phasenschieber und einem Tiefpass besteht, wobei der Multiplizierer ein Referenzsignal, das jeweils die von dem Mikrocontroller vorgegebene Taktfrequenz aufweist, mit dem Empfangssignal multipliziert, wobei der Phasenschieber die Phasenlage von Referenzsignal und Empfangssignal anpasst, und wobei am Ausgang des ersten Tiefpasses, der dem Multiplizierer nachgeschaltet ist, die phasenproportionale Gleichspannung abgreifbar ist.

Weiterhin wird es als vorteilhaft angesehen, wenn dem Tiefpass ein Komparator nachgeschaltet ist, der als Schwellwertdetektor dient und dessen Ausgangssignale an den Mikroprozessor weitergeleitet werden, wobei der Mikrocontroller anhand einer Mittelwertbildung über einen während des Frequenzsuchlaufs ermittelten ersten Schwellwert und zweiten Schwellwert die aktuelle Schwingfrequenz der schwingfähigen Einheit bei der vorgegebenen Phasenverschiebung zwischen Sendesignal und Empfangssignal ermittelt.

Eine vorteilhafte Weiterbildung der zuvor beschriebenen Lösung schlägt vor, dass dem Phasenschieber ein zweiter Tiefpass nachgeschaltet ist, an dessen Ausgang ein sinusförmiges Signal ansteht, mit dem die Sende-/Empfangseinheit die schwingfähige Einheit zu Schwingungen auf der aktuellen Schwingfrequenz der schwingfähigen Einheit bei der vorgegebenen Phasenverschiebung zwischen Sendesignal und Empfangssignal anregt.

Eine alternative Ausgestaltung der erfindungsgemäßen Vorrichtung sieht eine Regel-/Auswerteeinheit vor, die ein phasenselektives gleichgerichtetes Signal erzeugt. Anschließend wird das phasenselektive Signal in einen positiven Signalanteil und in einen negativen Signalanteil zerlegt, nachfolgend werden die Hüllkurve des positiven Signalanteils und die Hüllkurve des negativen Signalanteils bestimmt und addiert. Anhand des Additionssignals ermittelt die Regel-/Auswerteeinheit die Schwingfrequenz der schwingfähigen Einheit bei der vorgegebenen Phasenverschiebung zwischen Sendesignal und Empfangssignal.

Die Erfindung wird anhand der nachfolgenden Figuren näher erläutert. Es zeigt:
Fig. 1: ein Blockschaltbild einer ersten Ausgestaltung der erfindungsgemäßen Vorrichtung,
Fig. 2: eine schematische Darstellung des Verlaufs der phasenproportionalen Gleichspannung eines phasenselektiven Gleichrichters in Abhängigkeit von der Frequenz,
Fig. 3: ein Flussdiagramm zur Visualisierung des erfindungsgemäßen Verfahrens bezüglich der in den Figuren Fig. 1 und Fig. 2 dargestellte Ausführungsformen,
Fig. 4: ein Blockschaltbild zwecks Realisierung einer phasenselektiven Gleichrichtung,
Fig. 4a: ein Diagramm, das die Abhängigkeit der Amplituden des Eingangssignals und eines Rechtecksignals über die Zeit darstellt,
Fig. 4b: ein Diagramm, das die Abhängigkeit der Amplituden des Ausgangssignals des phasenselektiven Schalters / Gleichrichters über die Zeit darstellt, und zwar für den ungedämpften Fall, wenn die schwingfähige Einheit in Luft schwingt.
Fig. 5a: eine Darstellung der Amplituden des Ausgangssignals des phasenselektiven Gleichrichters und zwar für den ungedämpften Fall, wenn die schwingfähige Einheit in Luft schwingt, wenn die Sweepzeit 1sec beträgt und der phasenselektive Gleichrichter auf eine 90° Detektion eingestellt ist.
Fig. 5b: eine Darstellung der Amplituden des Ausgangssignals des phasenselektiven Gleichrichters und zwar für den ungedämpften Fall, wenn die schwingfähige Einheit in Luft schwingt, wenn die Sweepzeit 0.1 sec beträgt und der phasenselektive Gleichrichter auf eine 90° Detektion eingestellt ist.
Fig. 6: ein Prinzipbild des erfindungsgemäßen Verfahrens gemäß einer zweiten Ausgestaltung.

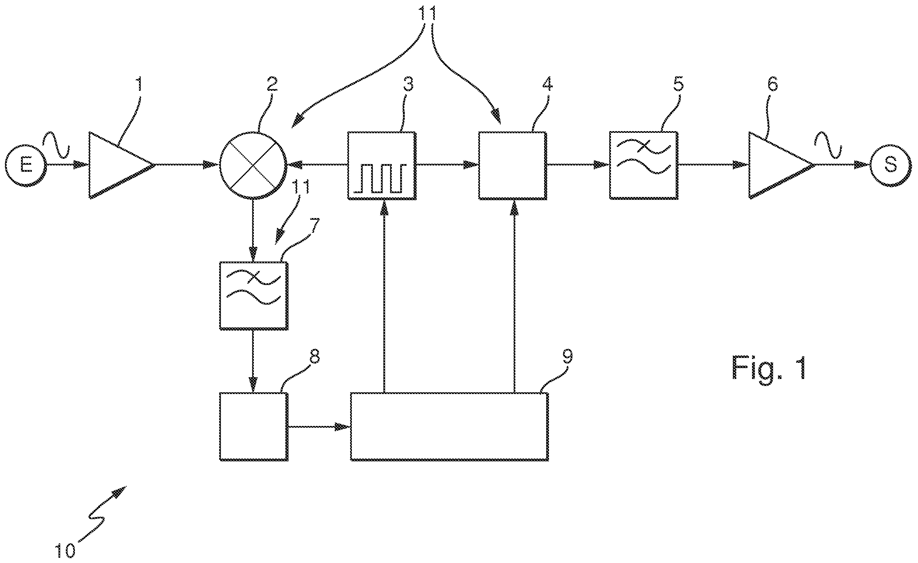

Fig. 1 zeigt ein Blockschaltbild einer ersten Ausgestaltung der erfindungs-gemäßen Vorrichtung. Das Empfangssignal E der in der Fig. 1 nicht gesonderten dargestellten schwingfähigen Einheit wird auf den Eingang des Verstärkers 1 gegeben. Der Verstärker 1 dient der Impedanz- und Amplitudenanpassung zwischen der Empfangseinheit E, üblicherweise zumindest einem piezoelektrischen Element, der schwingfähigen Einheit und der Regel-/Auswerteeinheit 10. Dem Verstärker 1 nachgeschaltet ist ein Multiplizierer 2, der das Signal der Empfangseinheit E mit dem periodischen Signal, hier einem Rechtecksignal, des digitalen Frequenzgenerators 3 multipliziert. Das Ausgangssignal des Multiplizierers 2 weist den Phasenunterschied bzw. die Phasenverschiebung zwischen dem Ausgangssignal des Verstärkers 1 und dem Ausgangssignals des Frequenzgenerators 3 als Gleichspannungsanteil auf. Dieser Gleichspannungsanteil wird über den Tiefpass 7 ausgefiltert. Multiplizierer 2 und Tiefpass 7 bilden zusammen mit dem Phasenschieber 4 den phasenselektiven Gleichrichter 11.

Der digitale Frequenzgenerator 3 erzeugt das Referenzrechtecksignal für die Zwangsanregung der schwingfähigen Einheit. Der variable Phasenschieber 4 stellt den Phasenunterschied zwischen dem Signal der Empfangseinheit E und dem Signal der Sendeeinheit S so ein, dass sich bei der Multiplikation der beiden Signale für den Gleichspannungsanteil ein bestimmter Pegel ergibt. Der Phasenunterschied kann auf jeden gewünschten Wert eingestellt werden.

Der Tiefpass 5 formt das Rechtecksignal des Frequenzgenerators 3 in ein sinusähnliches Signal um. Es wird hier eine sog. Oberwellenunterdrückung durchgeführt. Der Verstärker 6 dient wiederum der Impedanz- und Amplitudenanpassung des Signals der Sendeeinheit S.

Der Mikrocontroller 9 dient der Steuerung und Regelung des Sweep-Verfahrens zur Ermittlung der aktuellen Resonanzfrequenz. Weiterhin übernimmt er die Kommunikation mit einer übergeordneten, in Fig. 1 nicht gesondert dargestellten Steuereinheit.

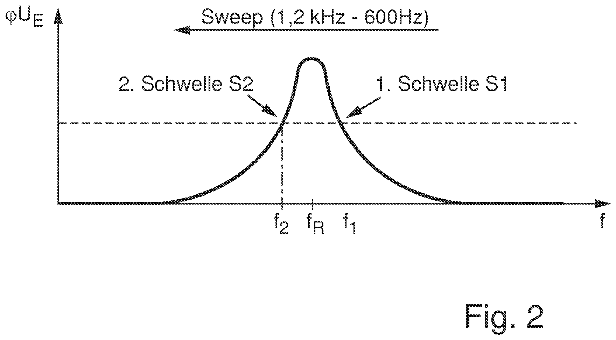

Um die aktuelle Resonanzfrequenz der schwingfähigen Einheit aufzufinden, erfolgt erfindungsgemäß ein Frequenzsuchlauf, ein sog. Sweep. Die Frequenz des vom digitalen Frequenzgenerator 3 erzeugten Signals wird per Software von dem Mikrocontroller 9 durchgestimmt. Somit ergibt sich der in Fig. 2 dargestellte Verlauf der phasenselektiven Gleichspannung.

Der Komparator 8 vergleicht die phasenselektive bzw. phasenproportionale Gleichspannung mit einem vorgegebenen Schwellwert S. Bei Erreichen des ersten Schwellwerts S1 wird der Sweep angehalten, und die Frequenz f1 wird in einem dem Mikrocontroller 9 zugeordneten Speicherelement gespeichert. Danach wird der Sweep bis zum Erreichen des zweiten Schwellwerts S2 fortgesetzt. Die zum zweiten Schwellwert S2 gehörende Frequenz f2 wird gleichfalls gespeichert. Anschließend wird aus den beiden Frequenzwerten S1, S2 das arithmetische Mittel berechnet. Der Sweep selbst erfolgt bevorzugt von höheren zu niedrigeren Frequenzen.

Die ermittelte Frequenz, die der aktuelle Resonanzfrequenz *f_{R}* der schwingfähigen Einheit entspricht, wird eingestellt; die schwingfähige Einheit wird mit der ermittelten aktuellen Resonanzfrequenz *f_{R}* zu Schwingungen angeregt. Sobald sich die Resonanzfrequenz der schwingfähigen Einheit ändert, wird der nächste Sweep durchgeführt.

Die schwingfähige Einheit kann, wie bereits in der Beschreibungseinleitung dargelegt, sehr unterschiedlich ausgestaltet sein. Die erfindungsgemäße Lösung zeichnet sich insbesondere dadurch aus, dass es erstmals möglich ist, unterschiedliche Schwingsysteme mit einer zumindest nahezu einheitlichen, identischen Elektronik auszustatten. Die erfindungsgemäße Vorrichtung bzw. das erfindungsgemäße Verfahren liefern eine universelle Plattform für unterschiedlichste Schwingsysteme, die im Bereich der Füllstands-, Phasengrenze- oder Dichtemessung zur Anwendung kommen.

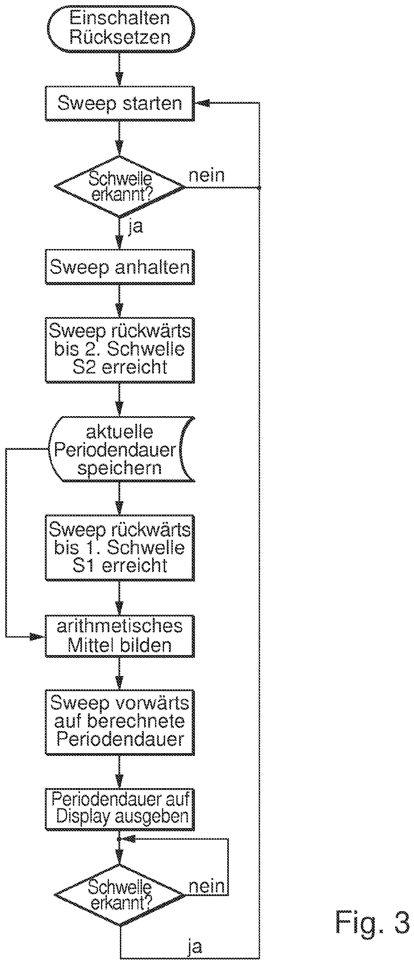

In Fig. 3 ist ein Ablaufdiagramm zu sehen, das die einzelnen Schritte des erfindungsgemäßen Verfahrens verdeutlicht. Da das Ablaufdiagramm selbst- erklärend ist, wird an dieser Stelle auf eine Wiederholung verzichtet.

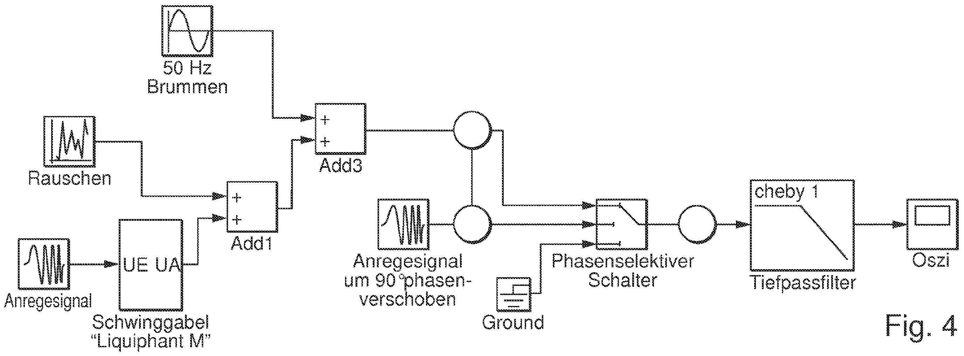

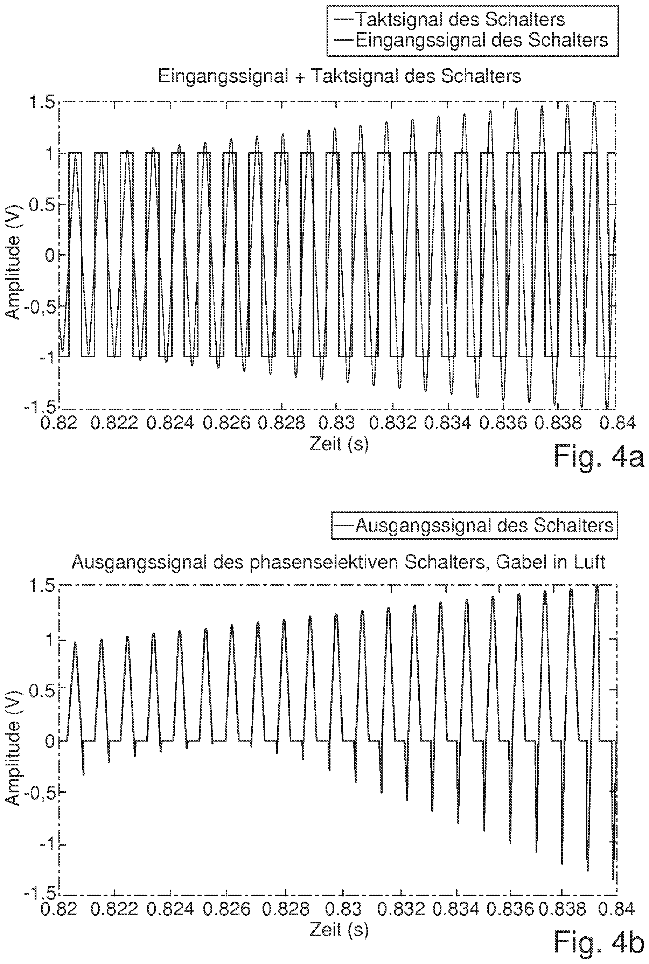

Fig. 4 zeigt ein Blockschaltbild der phasenselektiven Gleichrichtung im Falle eines mechanisch ungedämpften Schwingsystems. Das Anregungssignal, mit dem die schwingfähige Einheit zu Schwingungen angeregt wird, wird über die Sende-/Empfangseinheit S/E auf die Membran und die an ihr befestigte schwingfähige Einheit übertragen. Dem Ausgangssignal der Sende-/Empfangseinheit S/E überlagern sich Störsignale, wie Rauschen und Netzbrummen bei 50 Hz. Dieses mit Störsignalen überlagerte Ausgangs-signal wird zusammen mit dem um 90° phasenverschobenen Anregungssignal dem phasenselektiven Schalter zugeführt. Da die Phasenverschiebung der Eigenfrequenz im ungedämpften Fall 90° beträgt, ist zu erwarten, dass das phasenselektive gleichgerichtete Signal im Resonanzfall folglich nur aus positiven Halbwellen besteht und zu diesem Zeitpunkt auch die maximale Amplitude aufweist. Die entsprechenden Diagramme sind in den Figuren Fig. 4a und Fig. 4b dargestellt.

In Abhängigkeit von der Sweepzeit, also der Zeitdauer mit der ein Sweep über den Arbeitsbereich der schwingfähigen Einheit von der niedrigsten zur höchsten Frequenz durchgeführt wird, verschiebt sich die Resonanzfrequenz, bei der die maximale Amplitude auftritt. Darüber hinaus verschiebt sich die Eigenfrequenz infolge der verzögerten 'Speicherzeit' des mechanischen Schwingsystems. Die Resonanzfrequenz ist definiert als die Frequenz des Ausgangsignals zum Zeitpunkt maximaler Amplitude; die Eigenfrequenz ist definiert als die Frequenz bei einer Phasendrehung von 90° zwischen dem Sende- und dem Empfangssignal. Durch die erzwungene Anregung der schwingfähigen Einheit kommt es zu einer Verschiebung von Resonanz- und Eigenfrequenz.

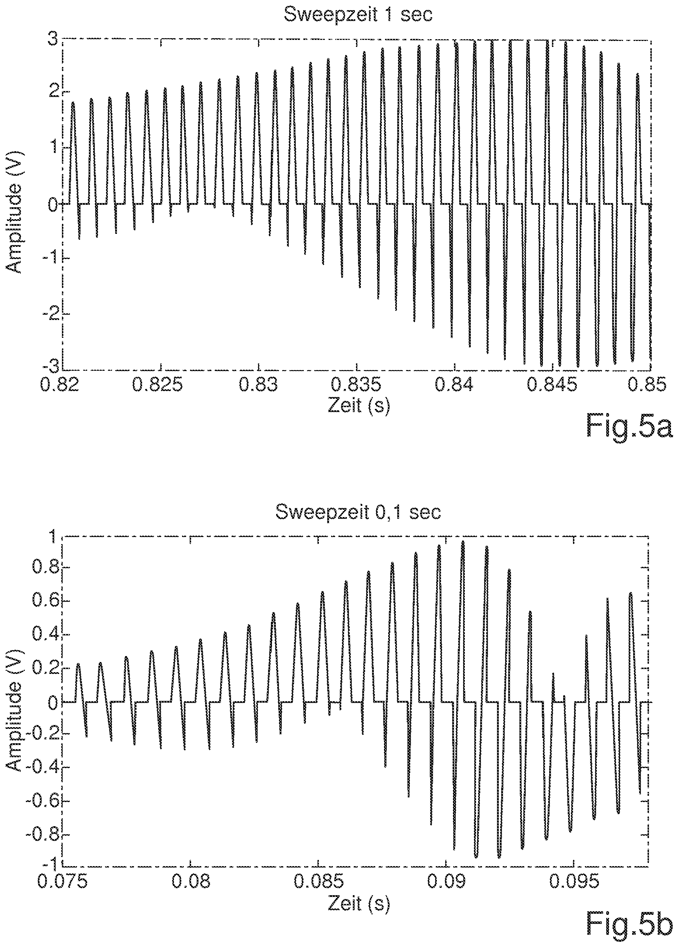

Infolge dieser Verschiebungen hat der positive Anteil des phasenselektven Signals sein Maximum zu einem anderen Zeitpunkt als der negative Anteil des Signals seinen Nulldurchgang. Dargestellt ist dieser Sachverhalt in den Figuren Fig. 5a und Fig. 5b, der das Verhalten des phasenselektiven Signals bei zwei unterschiedlichen Sweepgeschwindigkeiten von 1 sec und von 0.1 sec zeigt. Die Bestimmung der Resonanzfrequenz mit Hilfe des Komparators wird zusätzlich dadurch erschwert, dass die Amplitude der phasenselektive Gleichspannung neben der Abhängigkeit von der Sweepzeit auch eine starke Abhängigkeit von der Dämpfung des Mediums aufweist, mit dem die schwingfähige Einheit in Kontakt kommt.

Infolge der Phasenverschiebung und der Amplitudenvariation wird eine exakte Auswertung mittels Tiefpass und Komparator erschwert. Die in den Figuren Fig. 1 - Fig. 3 dargestellte Lösung stößt daher insbesondere bei hohen Sweepgeschwindigkeiten an ihre Grenzen.

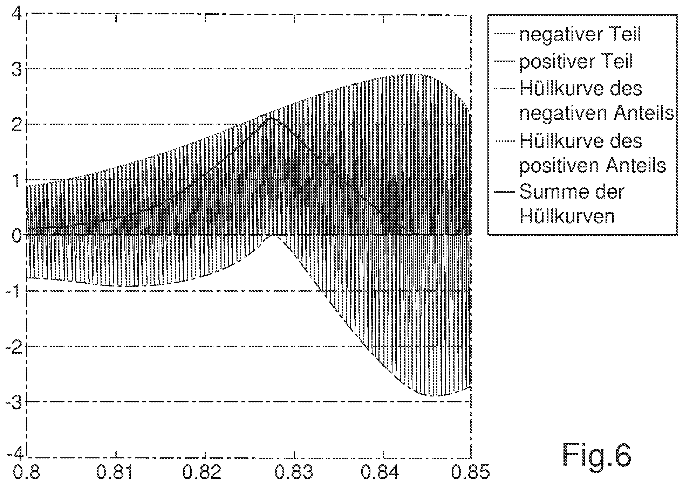

Um das erfindungsgemäße Verfahren auch bei hohen Sweepzeiten anwenden zu können, ist in Fig. 6 eine alternative Lösung aufgezeigt. Das phasenselektive gleichgerichtete Signal wird in seine positiven und in seine negativen Signalanteile separiert. Anschließend werden die beiden Signalanteile addiert. Da die Maxima des positiven Signalanteils und des negativen Signalanteils gegeneinander verschoben sind, werden zunächst die Hüllkurven der beiden Signalanteile bestimmt und anschließend summiert, d.h. es wird eigentlich eine Differenzbildung durchgeführt. Die Bestimmung der Hüllkurven erfolgt mittels eines analogen oder digitalen Hüllkurven-detektors. Das resultierende Additionssignal/Differenzsignal besitzt sein Maximum bei der jeweils eingestellten, vorgegebenen Phasenverschiebung zwischen Sende- und dem Empfangssignal. Vorzugsweise beträgt die Phasenverschiebung 90°.

### Bezugszeichenliste

- 1: Verstärker
- 2: Multiplizierer
- 3: digitaler Frequenzgenerator
- 4: Phasenschieber
- 5: erster Tiefpass
- 6: Verstärker
- 7: zweiter Tiefpass
- 8: Komparator
- 9: Mikrocontroller
- 10: Regel-/Auswerteeinheit
- 11: Phasenselektiver Gleichrichter
- E: Empfangseinheit
- S: Sendeeinheit

## Patentansprüche

1. Verfahren zur Bestimmung oder Überwachung eines vorbestimmten Füllstandes, der Phasengrenze oder der Dichte eines Mediums in einem Behälter mit einer schwingfähigen Einheit, wobei die schwingfähige Einheit auf der Höhe des vorbestimmten Füllstandes angebracht wird, wobei die schwingfähige Einheit mittels eines Frequenzsuchlaufs (Sweep) innerhalb eines vorbestimmbaren Frequenzbandes im Arbeitsbereich der schwingfähigen Einheit sukzessive mit aufeinander folgenden diskreten Erregerfrequenzen zu Schwingungen angeregt wird, wobei die entsprechenden Schwingungen der schwingfähigen Einheit in Form von Empfangssignalen empfangen werden, wobei über den Frequenzsuchlauf die Erregerfrequenz ermittelt wird, bei der die schwingfähige Einheit mit einer Schwingfrequenz schwingt, die eine vorgegebene Phasenverschiebung zwischen dem Sendesignal und dem Empfangssignal aufweist, und wobei die Sende-/Empfangseinheit (S/E) die schwingfähige Einheit mit der ermittelten Schwingfrequenz zu Schwingungen anregt oder wobei der nachfolgende Frequenzsuchlauf gestartet wird, und wobei die Schwingfrequenz bei der vorgegebenen Phasenverschiebung zwischen Sendesignal und Empfangssignal über die Auswertung der Amplituden der an der Sende-/Empfangseinheit (S/E) empfangenen Empfangssignale oder über die Auswertung der Phasenverschiebung zwischen dem Sendesignal und dem Empfangssignal ermittelt wird.

2. Verfahren nach Anspruch 1, wobei für den Fall, dass die schwingfähige Einheit außerhalb der Schwingfrequenz bei der vorgegebenen Phasenverschiebung zwischen Sendesignal und Empfangssignal schwingt, ein erneuter Frequenzsuchlauf gestartet wird.

3. Verfahren nach Anspruch 1 oder 2, wobei die Auswertung der Phasenverschiebung zwischen dem Sendesignal und dem Empfangssignal über eine phasenselektive Gleichrichtung erfolgt, welche eine phasen- und amplitudenproportionale Gleichspannung erzeugt und wobei die Empfangssignale des phasenselektiven Gleichrichters (11) durch das Empfangssignal der Sende-/Empfangseinheit (S/E) und einem aus der Sendeeinheit abgeleiteten Signal gebildet werden.

4. Verfahren nach Anspruch 1 oder 3, wobei während eines Frequenzsuchlaufs der Frequenzbereich im Arbeitsbereich der schwingfähigen Einheit überfahren wird.

5. Verfahren nach Anspruch 3 oder 4, wobei anhand von zwei im wesentlichen symmetrisch zur Schwingfrequenz bei der vorgegebenen Phasenverschiebung zwischen Sendesignal und Empfangssignal liegenden Frequenzen, bei denen ein vorgegebener Schweilwert der Amplitude der Empfangssignale oder der phasenproportionalen Gleichspannung erreicht bzw. überschritten werden, die Schwingfrequenz der schwingfähigen Einheit bei der vorgegebenen Phasenverschiebung zwischen Sendesignal und Empfangssignal ermittelt wird.

6. Verfahren nach Anspruch 1 oder 2, wobei das von einem phasenselektiven Gleichrichter (11) erzeugte phasenselektive Signal in einen positiven Signalanteil und in einen negativen Signalanteil zerlegt wird, wobei die Hüllkurve des positiven Signalanteils und die Hüllkurve des negativen Signalanteils gebildet werden, wobei die beiden Hüllkurven addiert werden und wobei anhand des Additionssignals die Schwingfrequenz der schwingfähigen Einheit bei der vorgegebenen Phasenverschiebung zwischen Sendesignal und Empfangssignal ermittelt wird.

7. Vorrichtung zur Bestimmung oder Überwachung eines vorbestimmten Füllstandes oder einer Phasengrenze eines Mediums in einem Behälter mit einer schwingfähigen Einheit, wobei die schwingfähige Einheit auf der Höhe des vorbestimmten Füllstandes angebracht ist, wobei eine Sende-/Empfangseinheit (S/E) vorgesehen ist, die die schwingfähige Einheit mittels eines Frequenzsuchlaufs innerhalb eines vorbestimmbaren Frequenzbandes im Arbeitsbereich der schwingfähigen Einheit sukzessive mit aufeinander folgenden diskreten Erregerfrequenzen zu Schwingungen anregt und die die entsprechenden Schwingungen der schwingfähigen Einheit empfängt, wobei eine Regel-/Auswerteeinheit (10) vorgesehen ist, die die Erregerfrequenz ermittelt, bei der die schwingfähige Einheit bei einer Schwingfrequenz mit einer vorgegebenen Phasenverschiebung zwischen Sendesignal und Empfangssignal schwingt und wobei die Sende-/Empfangseinheit (S/E) die schwingfähige Einheit mit der ermittelten Schwingfrequenz bei der vorgegebenen Phasenverschiebung zwischen Sendesignal und Empfangssignal zu Schwingungen anregt wobei die Regel-/Auswerteeinheit (10) so ausgestaltet ist, dass sie während des Frequenzsuchlaufs die Schwingfrequenz der schwingfähigen Einheit bei der vorgegebenen Phasenverschiebung zwischen Sendesignal und Empfangssignal über die Auswertung der Phase zwischen dem Sendesignal und dem Empfangssignal oder der Amplitude des Empfangssignals ermittelt.

8. Vorrichtung nach Anspruch 7, wobei eine Regel-/Auswerteeinheit mit einem phasenselektiver Gleichrichter (11) vorgesehen ist, der eine phasenselektive Gleichspannung erzeugt, wobei dem phasenselektiven Gleichrichter (11) ein Tiefpassfilter (7) und ein Komparator (8) nachgeschaltet sind, und wobei ein Mikrocontroller (9) vorgesehen ist, der anhand von zwei symmetrisch zur Resonanzfrequenz liegenden Frequenzen, bei denen der vorgegebene Schwellwert (S1, S2) der Amplitude der Empfangssignale oder der phasenproportionalen Gleichspannung des phasenselektiven Gleichrichters (11) erreicht bzw. überschritten werden, die Schwingfrequenz der schwingfähigen Einheit bei der vorgegebenen Phasenverschiebung zwischen Sendesignal und Empfangssignal ermittelt wird.

9. Vorrichtung nach Anspruch 7 oder 8, wobei eine Regel-/Auswerteeinheit vorgesehen ist, die ein phasenselektives gleichgerichtetes Signal erzeugt, die das phasenselektives Signal in einen positiven Signalanteil und in einen negativen Signalanteil zerlegt, die die Hüllkurve des positiven Signalanteils und die Hüllkurve des negativen Signalsanteils bestimmt und addiert, und die anhand des Additionssignals die Schwingfrequenz der schwingfähigen Einheit bei der vorgegebenen Phasenverschiebung zwischen Sendesignal und Empfangssignal ermittelt.

10. Vorrichtung nach einem oder mehreren der Ansprüche 7-9, wobei der phasenempfindliche Gleichrichter (11) aus einem Multiplizierer (2), einer Erzeugereinheit (3) für ein Referenzsignal, dessen Taktfrequenz über den Mikrocontroller (9) einstellbar ist, einem über den Mikrocontroller (9) steuerbaren Phasenschieber (4) und einem Tiefpass (5) besteht, wobei der Multiplizierer (2) das Referenzsignal der Erzeugereinheit (3), das jeweils die von dem Mikrocontroller (9) vorgegebene Taktfrequenz aufweist, mit dem Empfangssignal multipliziert, wobei der Phasenschieber (4) die Phasenlage von Referenzsignal und Empfangssignal anpasst, und wobei am Ausgang des ersten Tiefpasses (7), der dem Multiplizierer (2) nachgeschaltet ist, die phasenproportionale Gleichspannung abgreifbar ist.

11. Vorrichtung nach Anspruch 10, wobei dem Tiefpass (7) ein Komparator (8) nachgeschaltet ist, der als Schwellwertdetektor dient und dessen Ausgangssignale an den Mikrocontroller (9) weitergeleitet werden, wobei der Mikrocontroller (9) anhand einer Mittelwertbildung über einen während des Frequenzsuchlaufs (Sweep) ermittelten ersten Schwellwert (S1) und zweiten Schwellwert (S2) die aktuelle Schwingfrequenz der schwingfähigen Einheit bei der vorgegebenen Phasenverschiebung zwischen Sendesignal und Empfangssignal ermittelt.

12. Vorrichtung nach Anspruch 10, wobei dem Phasenschieber (4) ein zweiter Tiefpass (5) nachgeschaltet ist, an dessen Ausgang ein sinusförmiges Signal ansteht, mit dem die Sende-/Empfangseinheit (S/E) die schwingfähige Einheit zu Schwingungen auf der aktuellen Schwingfrequenz der schwingfähigen Einheit bei der vorgegebenen Phasenverschiebung zwischen Sendesignal und Empfangssignal anregt.

13. Vorrichtung nach einem oder mehreren der vorhergehenden Ansprüche 7-12, wobei die Regel-/Auswerteeinheit als digitale Schaltung, insbesondere als digitaler Signalprozessor DSP, als FPGA oder PSoC ausgestaltet ist.

14. Vorrichtung nach einem oder mehreren der vorhergehenden Ansprüche 7-13, wobei es sich bei der Schwingfrequenz der schwingfähigen Einheit mit vorgegebener Phase um die Schwingfrequenz des Grundmodes oder um die Schwingfrequenz eines höheren Modes bei der vorgegebenen Phasenverschiebung handelt.

## Claims

1. Procedure for determining or monitoring a predefined level, the phase limit or the density of a medium in a vessel with a unit capable of vibration, wherein the unit capable of vibration is fitted at the height of the predefined level, wherein the unit capable of vibration is stimulated to vibrate gradually with a frequency sweep within a predefined frequency band in the operating range of the unit capable of vibration with consecutive discrete excitation frequencies, wherein the corresponding vibrations of the unit capable of vibration are received in the form of reception signals, wherein the frequency band at which the unit capable of vibration vibrates at a vibration frequency, which has a predefined phase shift between the transmission signal and the reception signal, is determined, and wherein the transmission/reception unit (S/E) excites the unit capable of vibration to vibrate at the determined vibration frequency or wherein the subsequent frequency sweep is started, and wherein the vibration frequency at the predefined phase shift between the transmission signal and the reception signal is determined via the evaluation of the amplitudes of reception signals received at the transmission/reception unit (S/E) or via the evaluation of the phase shift between the transmission signal and the reception signal.

2. Procedure as claimed in Claim 1, wherein in the event that the unit capable of vibration vibrates outside the vibration frequency at the predefined phase shift between the transmission signal and the reception signal, a new frequency sweep is started.

3. Procedure as claimed in Claim 1 or 2, wherein the evaluation of the phase shift between the transmission signal and the reception signal is performed via a phase-selective rectification which generates a DC voltage that is proportional to the phase and amplitude, and wherein the reception signals of the phase-selective rectifier (11) are formed by the reception signal of the transmission/reception unit (S/E) and a signal derived from the transmission unit.

4. Procedure as claimed in Claim 1 or 3, wherein, during a frequency sweep, the frequency range is overrun in the operational range of the unit capable of vibration.

5. Procedure as claimed in Claim 3 or 4, wherein the vibration frequency of the unit capable of vibration at the predefined phase shift between the transmission signal and the reception signal is determined using two frequencies, which are essentially symmetrical to the vibration frequency at the predefined phase shift between the transmission signal and the reception signal, at which a predefined threshold value of the amplitudes of the reception signals or the phase-proportional DC voltage is reached or exceeded.

6. Procedure as claimed in Claim 1 or 2, wherein the phase-selective signal that is generated by a phase-selective rectifier (11) is broken down into a positive signal part and a negative signal part, wherein the envelope of the positive signal part and the envelope of the negative signal part are formed, wherein the two envelopes are added and wherein the vibration frequency of the unit capable of vibration at the predefined phase shift between the transmission signal and reception signal is determined using the addition signal.

7. Apparatus for determining or monitoring a predefined level or a phase limit of a medium in a vessel with a unit capable of vibration, wherein the unit capable of vibration is fitted at the height of the predefined level, wherein a transmission/reception unit (S/E) is provided which stimulates the unit capable of vibration to vibrate gradually with a frequency sweep within a predefined frequency band in the operating range of the unit capable of vibration with consecutive discrete excitation frequencies, and which receives the corresponding vibrations of the unit capable of vibration, wherein a control/evaluation unit (10) is provided that determines the excitation frequency at which the unit capable of vibration vibrates at a vibration frequency at a vibration frequency with a predefined phase shift between the transmission signal and the reception signal, and wherein the transmission/reception unit (S/E) excites the unit that is capable of vibration to vibrate with the determined vibration frequency at the predefined phase shift between the transmission signal and the reception signal, wherein the control/evaluation unit (10) is designed in such a way that it determines, during the sweep, the vibration frequency of the unit capable of vibration at the predefined phase shift between the transmission signal and the reception signal via the evaluation of the phase between the transmission signal and the reception signal or the amplitude of the reception signal.

8. Apparatus as claimed in Claim 7, wherein a control/evaluation unit is provided with a phase-selective rectifier (11) which generates a phase-selective DC voltage, wherein a low-pass filter (7) and a comparator (8) are downstream from the phase-selective rectifier (11), and wherein a microcontroller (8) is provided which determines the vibration frequency of the unit capable of vibration at the predefined phase shift between the transmission signal and the reception signal using two frequencies - symmetrical to the resonance frequency - at which the predefined threshold value (S1, S2) of the amplitude of the reception signals or of the phase-proportional DC voltage of the phase-selective rectifier (11) is reached or exceeded.

9. Apparatus as claimed in Claim 7 or 8, wherein a control/evaluation unit is provided that generates a phase-selective rectified signal that breaks down the phase-selective signal into a positive signal part and a negative signal part, which determines and adds the envelope of the positive signal part and the envelope of the negative signal part, and which determines the vibration frequency of the unit capable of vibration at the predefined phase shift between the transmission signal and reception signal using the addition signal.

10. Apparatus as claimed in one or more of the Claims 7-9, wherein the phase-sensitive rectifier (11) consists of a multiplier (2), a generator unit (3) for a reference signal whose clock frequency can be set via the microcontroller (9), a phase shifter (4) which can be controlled via the microcontroller (9) and a low-pass filter (5), wherein the multiplier (2) multiplies the reference signal of the generator unit (3), which has the clock frequency specified by the microcontroller, by the reception signal (9), wherein the phase shifter (4) adapts the phase position of the reference signal and reception signal and wherein the DC voltage in proportion to the phase can be measured at the output of the first low-pass filter (7), which is downstream from the multiplier (2).

11. Apparatus as claimed in Claim 10, wherein a comparator (8) is downstream from the low-pass filter (7) that acts as a threshold value detector and whose output signals are forwarded to the microcontroller (9), wherein the microcontroller (9) determines the current vibration frequency of the unit capable of vibration at the predefined phase shift between the transmission signal and the reception signal by averaging over a first threshold value (S1) and a second threshold value (S2) determined during the frequency sweep.

12. Apparatus as claimed in Claim 10, wherein a second low-pass filter (5) is downstream from the phase shifter (4), wherein at the output of said filter a sine-form signal is present with which the transmission/reception unit (S/E) stimulates the unit capable of vibration to perform vibrations at the current frequency of the unit capable of vibration at the predefined phase shift between the transmission signal and the reception signal.

13. Apparatus as claimed in one or more of the previous Claims 7-12, wherein the control/evaluation unit is designed as a digital circuit, particularly as a digital signal processor DSP, as an FPGA or a PSoC.

14. Apparatus as claimed in one or more of the previous Claims 7-13, wherein the vibration frequency of the unit capable of vibration with a predefined phase is the vibration frequency of the basic mode or the vibration frequency of a higher mode at the predefined phase shift.

## Revendications

1. Procédé destiné à la détermination ou à la surveillance d'un niveau prédéfini, de la limite de phase ou de la densité d'un produit dans un réservoir avec une unité apte à vibrer, l'unité apte à vibrer étant installée à la hauteur du niveau prédéfini, l'unité apte à vibrer étant excitée en vibrations successivement avec des fréquences d'excitation discrètes consécutives au moyen d'un balayage de fréquence au sein d'une bande de fréquences prédéfinissable dans la zone de travail de l'unité apte à vibrer, les vibrations correspondantes de l'unité apte à vibrer étant reçues sous la forme de signaux de réception,
procédé pour lequel on détermine au moyen du balayage de fréquence la fréquence d'excitation à laquelle l'unité apte à vibrer vibre à la fréquence de vibration, qui présente un décalage de phase prédéfini entre le signal d'émission et le signal de réception, et l'unité d'émission / de réception (S/E) excitant l'unité apte à vibrer en vibrations à la fréquence de vibration déterminée ou le balayage de fréquence suivant étant démarré, et la fréquence de vibration étant déterminée lors du décalage de phase prédéfini entre le signal d'émission et le signal de réception en exploitant les amplitudes des signaux de réception reçus sur l'unité d'émission / de réception (S/E) ou en exploitant le décalage de phase entre le signal d'émission et le signal de réception.

2. Procédé selon la revendication 1, pour lequel, pour le cas où l'unité apte à vibrer vibre en dehors de la fréquence de vibration lors du décalage de phase prédéfini entre le signal d'émission et le signal de réception, un nouveau balayage de fréquence est démarré.

3. Procédé selon la revendication 1 ou 2, pour lequel l'exploitation du décalage de phase entre le signal d'émission et le signal de réception via un redressement à sélection de phase, lequel redressement génère une tension continue proportionnelle à la phase et à l'amplitude, et les signaux de réception du redresseur sélecteur de phase (11) étant formés par le signal de réception de l'unité d'émission / de réception (S/E) et d'un signal dérivé de l'unité d'émission.

4. Procédé selon la revendication 1 ou 3, pour lequel la gamme de fréquences est parcourue dans la zone de travail de l'unité apte à vibrer pendant un balayage des fréquences.

5. Procédé selon la revendication 3 ou 4, pour lequel la fréquence de vibration de l'unité apte à vibrer est déterminée lors du décalage de phase prédéfini entre le signal d'émission et le signal de réception, au moyen de deux fréquences pour l'essentiel symétriques par rapport à la fréquence de vibration lors du décalage de phase prédéfini entre le signal d'émission et le signal de réception, fréquences pour lesquelles une valeur seuil prédéfinie de l'amplitude des signaux de réception ou de la tension continue proportionnelle à la phase est atteinte ou dépassée.

6. Procédé selon la revendication 1 ou 2, pour lequel le signal de sélection de phase généré par le redresseur sélecteur de phase (11) est décomposé en une part de signal positive et en une part de signal négative, l'enveloppante de la part de signal positive et l'enveloppante de la part de signal négative étant formées, les deux enveloppantes étant additionnées et la fréquence de vibration de l'unité apte à vibrer lors du décalage de phase prédéfini entre le signal d'émission et le signal de réception étant déterminée au moyen du signal d'addition.

7. Dispositif destiné à la détermination ou la surveillance d'un niveau prédéfini ou d'une limite de phase d'un produit dans un réservoir avec une unité apte à vibrer, l'unité apte à vibrer étant installée à la hauteur du niveau prédéfini, une unité d'émission / de réception (S/E) étant prévue, laquelle excite en vibrations l'unité apte à vibrer, dans la zone de travail de l'unité apte à vibrer, successivement avec des fréquences d'excitation discrètes consécutives au moyen d'un balayage de fréquence au sein d'une bande de fréquences prédéfinissable, et laquelle reçoit les vibrations correspondantes de l'unité apte à vibrer, une unité de régulation / d'exploitation (10) étant prévue pour déterminer la fréquence d'excitation à laquelle l'unité apte à vibrer vibre à une fréquence de vibration avec un décalage de phase prédéfini entre le signal d'émission et le signal de réception, et l'unité d'émission / de réception (S/E) excitant en vibrations l'unité apte à vibrer à la fréquence de vibration déterminée lors du décalage de phase prédéfini entre le signal d'émission et le signal de réception, l'unité de régulation / d'exploitation étant conçue de telle sorte à déterminer, pendant le balayage de fréquence, la fréquence de vibration de l'unité apte à vibrer lors du décalage de phase prédéfini entre le signal d'émission et le signal de réception en exploitant la phase entre le signal d'émission et le signal de réception, ou l'amplitude du signal de réception.

8. Dispositif selon la revendication 7, pour lequel est prévue une unité de régulation / d'exploitation avec un redresseur sélecteur de phase (11) générant une tension continue à sélection de phase, un filtre passe-bas (7) et un comparateur (8) étant couplés en aval du redresseur sélecteur de phase (11), et un microcontrôleur (8) étant prévu, lequel détermine la fréquence de vibration de l'unité apte à vibrer lors du décalage de phase prédéfini entre le signal d'émission et le signal de réception, au moyen de deux fréquences symétriques par rapport à la fréquence de résonance, à laquelle la valeur seuil (S1, S2) prédéfinie de l'amplitude des signaux de réception ou de la tension continue proportionnelle à la phase du redresseur sélecteur de phase (11) est atteinte ou dépassée.

9. Dispositif selon la revendication 7 ou 8, pour lequel est prévue une unité de régulation / d'exploitation qui génère un signal redressé à sélection de phase, qui décompose le signal à sélection de phase en une part de signal positive et une part de signal négative, qui définit et additionne l'enveloppante de la part de signal positive et l'enveloppante de la part de signal négative, et qui détermine, au moyen du signal d'addition, la fréquence de vibration de l'unité apte à vibrer lors du décalage de phase prédéfini entre le signal d'émission et le signal de réception.

10. Dispositif selon l'une ou plusieurs des revendications 7 à 9, pour lequel le redresseur (11) sensible à la phase est constitué d'un multiplicateur (2), d'un module générateur (3) pour un signal de référence dont la fréquence d'horloge est réglable via le microcontrôleur (9), un déphaseur (4) pilotable via le microcontrôleur (9) et un filtre passe-bas (5), le multiplicateur (2) multipliant avec le signal de réception le signal de référence du module générateur (3), qui présente la fréquence d'horloge prédéfinie par le microcontrôleur (9), le déphaseur (4) adaptant la position de phase du signal de référence et du signal de réception, et la tension continue proportionnelle à la phase pouvant être prélevée à la sortie du premier filtre passe-bas (7), qui est couplé en aval du multiplicateur (2).

11. Dispositif selon la revendication 10, pour lequel est couplé en aval du filtre passe-bas (7) un comparateur (8) qui sert de détecteur de seuil et dont les signaux de sortie sont transmis au microcontrôleur (9), le microcontrôleur (9) déterminant, au moyen d'un calcul de moyenne via une première valeur seuil (S1) et une deuxième valeur seuil (S2) déterminées pendant le balayage de fréquence, la fréquence de vibration actuelle de l'unité apte à vibrer lors du décalage de phase prédéfini entre le signal d'émission et le signal de réception.

12. Dispositif selon la revendication 10, pour lequel est couplé en aval du déphaseur (4) un deuxième filtre passe-bas (5), dont la sortie délivre un signal sinusoïdal, avec lequel l'unité d'émission / de réception (S/E) excite en vibrations l'unité apte à vibrer à la fréquence actuelle de l'unité apte à vibrer lors du décalage de phase prédéfini entre le signal d'émission et le signal de réception.

13. Dispositif selon l'une ou plusieurs des revendications précédentes 7 à 12, pour lequel l'unité de régulation / d'exploitation est conçue en tant que circuit numérique, notamment en tant que processeur de signal numérique DSP, en tant que FPGA ou PSoC.

14. Dispositif selon l'une ou plusieurs des revendications précédentes 7 à 13, pour lequel il s'agit, concernant la fréquence de vibration de l'unité apte à vibrer avec une phase prédéfinie, d'une fréquence de vibration du mode fondamental ou de la fréquence de vibration d'un mode supérieur lors du décalage de phase prédéfini.
